# EUROPEAN PATENT SPECIFICATION

(11) **EP 2 095 251 B1**
(45) Date of publication and mention of the grant of the patent: **19.02.2014**
(21) Application number: 07865851.5
(22) Date of filing: 19.12.2007
(51) Int. Cl.: H04L 29/06

(54) **CONFIGURABLE METHOD FOR CONNECTING ONE OR MORE DEVICES TO A MEDIA PROCESS SYSTEM**
KONFIGURIERBARES VERFAHREN FÜR DEN ANSCHLUSS EINES ODER MEHRERER GERÄTE AN EIN MEDIENVERARBEITUNGSSYSTEM
PROCÉDÉ CONFIGURABLE PERMETTANT LA CONNEXION D'UN OU DE PLUSIEURS DISPOSITIFS À UN SYSTÈME DE TRAITEMENT DE MÉDIA

(30) Priority: 21.12.2006 US 876263 P; 14.12.2007 US 956682
(43) Date of publication of application: 02.09.2009
(73) Proprietor: Pitney Bowes, Inc., Stamford, CT 06926 (US)
(72) Inventor: MOZDZER, Joseph P., Shelton, CT 06484 (US); FAIRWEATHER, James A., Milford, CT 06460 (US); LYGA, Thomas M., Southbury, CT 06488 (US); EATON, David J., Newtown, CT 06470 (US)
(74) Representative: HOFFMANN EITLE
(86) International application number: PCT/US2007/088071
(87) International publication number: WO 2008/079853

(56) References cited:
- EP-A2- 1 701 246
- US-A- 5 708 810
- US-A- 5 754 434
- US-A1- 2004 221 051
- US-B1- 6 480 304
- US-B1- 6 725 300

## Description

### Field of the Invention

The invention relates generally to the field of the exchange of media items, media item data, and processing instructions from one device to another, and more particularly to the exchange of configurable mechanical configuration and protocol information between two devices.

### Background of the Invention

In media handling equipment, it is often desirable to interface the output of one media processing device to the input of a second mechanical device to create integrated single step media processing solutions. Invariably, the interface of these mechanisms requires not only the exchange of physical media, but the also the exchange of media meta data that includes, among other things, media attributes, customer data, and processing instructions.

The term "protocol" is used in information technology to represents an agreed upon format for transmitting data between two devices. The protocol determines the following: the type of error checking to be used; the data compression method, if any; how the sending device will indicate that it has finished sending a message; and how the receiving device will indicate that it has received a message. Protocols exist at several levels in a connection. For example, there are protocols for the data interchange at the hardware device level and protocols for data interchange at the application program level. Often there are one or more protocols at each exchange of information between devices.

At the application level, it becomes necessary to develop a communications protocol that could support the exchange of data between a first device and a second device that are components of a system, while the devices and system are under development. Typically, this would be done by determining the requirements of the finished system, designing a protocol that allows for this exchange of data, and creating a specification that defines the application level interface that meets the needs of the system. Often, placeholders are put into the specification to support features which may not be implemented for the original launch of the product, but are known to be desirable for future enhanced releases. This is done to minimize, or possibly, eliminate the need for changes to the protocol in these future releases.

The problem becomes still further complicated when the interface extends beyond either software and hardware messaging, and incorporates mechanical connections between devices. In these cases, even adopting placeholders in the specification does not provide sufficient means to connect devices, as suitable connection of the mechanical devices cannot be established.

One problem with the foregoing is that it is usually impossible to accurately identify all changes and enhancements that will be needed for future versions of the protocol at the time of the original implementation. The associated changes that are made at a later time then create incompatibilities between systems that were sold during the initial launch phase, and the newer systems containing the enhancements. Such incompatibilities are undesirable since they result in service calls to replace/update systems in the field and make inventory management more difficult.

A additional problem is that it is difficult to envision a fully adaptable mechanical interface point between two systems that can be configured to all ranges of critical mechanical parameter variations.

A further problem of the prior art is the ability for enhancements and changes to be made to the communications protocol without creating any incompatibilities.

Another problem of the prior art is that in the design portion of a project communications protocols were often designed to meet the immediate launch requirements of the project with little focus on the ease of maintaining backward compatibility when improvements are implemented at a later time. This results in either incompatibilities between different devices that comprise the system or large amounts of effort in subsequent software releases to avoid these incompatibilities.

US patent document 5,754,434 discloses a chain of machines allowing the generation of billing mail, including printing an overview sheet, printing detail billing records, collating sheets, including optional 'inserters', folding sheets, inserting into an envelop, etc. It further discloses the configuration of machines in order to have compatible capabilities (e.g. processing speed), however, no automation, no network connection, no protocol version negotiation, and no (automated) feature set negotiation are disclosed.

### Summary of the Invention

This invention overcomes the disadvantages of the prior art by providing a software sign on sequence that allows the devices to negotiate how they will communicate, what data will be exchanged and how they will mechanically operate, when they are connected to each other. This avoids the necessity of supplying new software programs to each device which is time consuming and expensive.

It avoids the development of mechanical interface hardware which is equally time consuming and expensive.

According to the present invention, there is provided a method for interfacing a source device to a receiving device according to claim 1.

For a better understanding of the invention and to show how the same may be carried into effect, reference will now be made, by way of example, to the accompanying drawings, in which:
Fig. 1 is a schematic block diagram of the major mechanical devices in the system and their interconnection;
Fig. 2 is a block diagram illustrating the major software devices in the system and their relationship to devices 50, 60 and 70 of Fig. 1;
Fig. 3 is a detailed schematic view of an example of a mechanical interface device;
Fig. 4 is a flow chart illustrating the sign on process of the devices shown in Figs. 1 and 2;
Fig. 5 is an example of the compatibility that may be achieved by the devices shown in Figs. 1 and 2;
Figs. 6A - 6C describe the messages and message parameters of example protocols 1, 2 and 3;
Fig. 7A is a sequence diagram showing an example of the usage of the message contained in rows 420 - 427 of table 400;
Fig. 7B is a sequence diagram showing an example of the run sequence that would be used if microcontroller 100 and microcontroller 101 had connected using the sign on sequence of Fig. 7A;
Fig. 7C is a sequence diagram showing an example the messages contained in table 402 that would be used if microcontroller 100 and microcontroller 101 supports protocol versions 1 , 2 and 3; and
Fig. 7D is a sequence diagram showing an example of the run sequence that would be used if microcontroller 100 and microcontroller 101 had connected using the sign on sequence of Fig. 7C.

The following describes a mechanical interface device, capable of accepting media items from the first device having a critical set of mechanical parameters, i.e., velocity, length and a motion profile and modifying these parameters to values acceptable to the second device. The mechanical interface device can facilitate the synchronization of critical timing between the two devices. The mechanical interface device can also provide additional processing functionality including diverting pieces from the main process flow, scanning to confirm collation integrity and measuring or identifying unknown properties of the media item such as, length, width or weight. Thus, the mechanical device may operate over a wide range of configurable parameters to accept media from device A and provide this media to device B.

The foregoing may be accomplished by providing a detailed sequence of "sign-on" messages whereby both the system and the external device that is connected to the system identify their capabilities and requirements to each other. During the course of this sign-on sequence, the devices select a mutually understandable variation of a protocol that supports the largest number of optional features.

The protocol may have a feature set which determines data that will be exchanged between the source device and the receiving device. The data may include collation data such as postage amounts, collation weight, class of service, any special services as well as collation processing instructions such as divert, seal or select feed for additional mail piece contents.

Additional optional data may include display screen information or supporting operating modes of the connected systems. It would be obvious to one skilled in the art that additional data may be exchanged such as dimensions of the collation input speed of the collation, information regarding the mail piece.

Using this flexible protocol, both the system and external devices software may be programmed to remain backward compatible with earlier versions of the other device. However there is no requirement that they do so.

An advantage of this method is that additional devices connected to the system may be made by different vendors and can be more easily integrated with the system.

A further advantage of this method is that fewer incompatibilities are created between the system and the attached external device as upgraded software becomes available for the device and/or the system.

A still further advantage of this method is that new external devices are more easily connected to the system. In many cases, an external device can be connected with existing systems without the need for new software or the development of mechanical hardware.

An additional advantage of this method is that compatibility can be determined simply by attempting to connect an external device to a system. There is no detriment to attempting to connect a non-compatible device.

A further advantage of this method is that the external device or the system can be easily made to remain backward compatible with older versions of the system and device.

An additional advantage of the method is that the protocol's sign-on concept is easily extensible to other products.

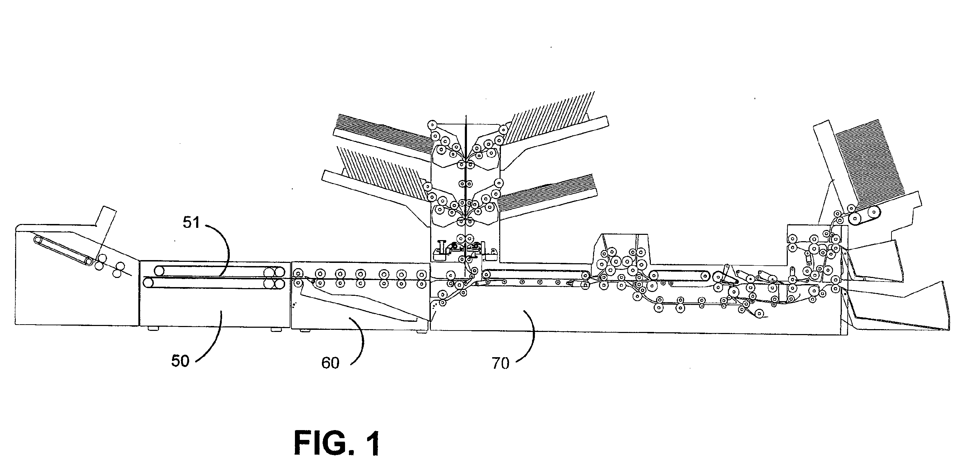

Turning now to the drawings, Fig. 1 is a schematic block diagram of major mechanical devices and their interconnection. Source device 50 and receiving device 70 interface with interface device 60. Device 50 may be for example a printer, sheet feeder, sheet cutter, accumulator, or any combination of the foregoing. Device 70 may be for example an accumulator, document inserter, folder, tabber, or any combination thereof. Device 50 processes physical components of mail pieces, i.e., items 51 including sheets, sets of sheets, inserts, booklets and other mail piece contents. Device 50 transports and operates on the foregoing items 51 by transporting items 51 at specified velocities, for instance, the velocity of items 51 at the output of device 50 is V₁ and the input velocity of items 51 to device 70 is V₂, where V₁ may be equal to, greater than or less than V₂.

One of the tasks of interface device 60 is to recognize or be informed of the velocity of its input items and similarly to recognize or be informed of the velocity of items 51 received by device 70 and to coordinate the necessary adaptation of the velocity of the items 51 such that the constraints of devices 50 and 70 are satisfied. Assuming an item 51 has a length L₁, a width W₁ and a height H₁, device 70 may require knowledge of L₁, W₁ and H₁ to perform correct operation on the item 51. Interface 60 can negotiate the transfer of acquisition information from device 50 to device 70 to facilitate the transfer of items 51.

Device 60 can also store and queue one or more items 51 received from device 50 and at the request of device 70 provide items 51 at an appropriate time and velocity. Device 60 may also be instructed by device 50 to remove an item 51 from the mail path so that item 51 is not transported to device 70. To accomplish the removal of items 51 divert gate 62 may be rotated such that item 51 is diverted into divert bin 61 as it is transported from device 50 to device 60. Alternatively device 70 may remove item 51 from the processing path by advancing item 51 into accumulator 71 such that the trailing edge of item 51 clears gate 72. Accumulator 71 may then reverse direction, thus driving item 51 through divert path 73 into divert bin 63.

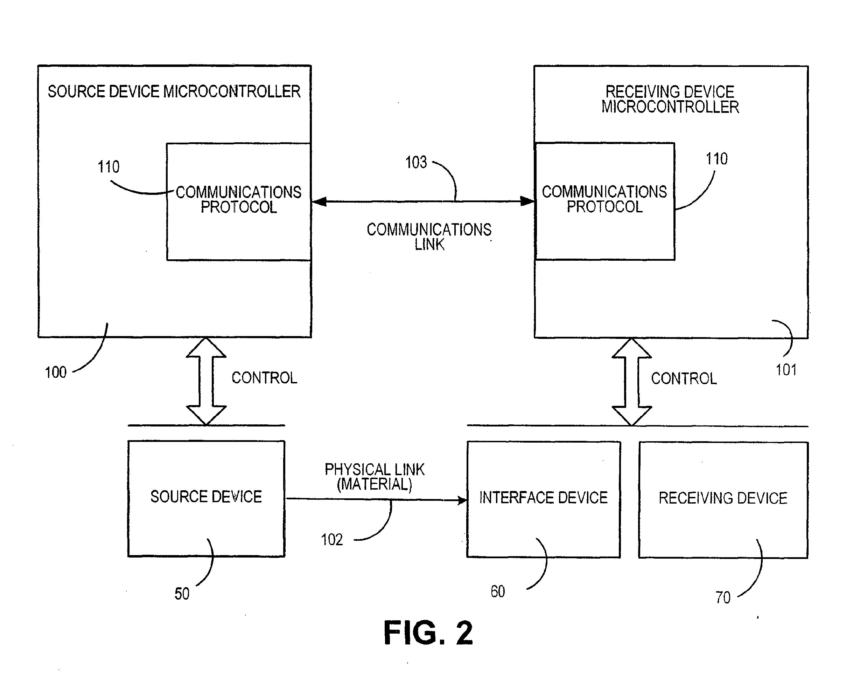

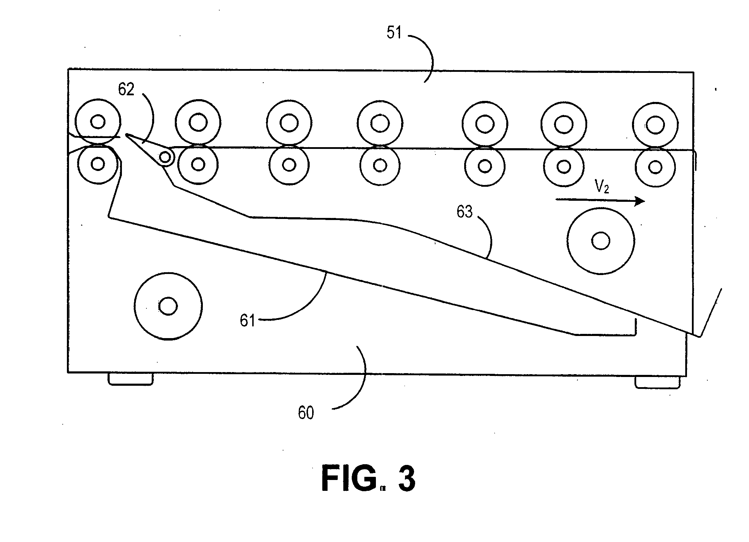

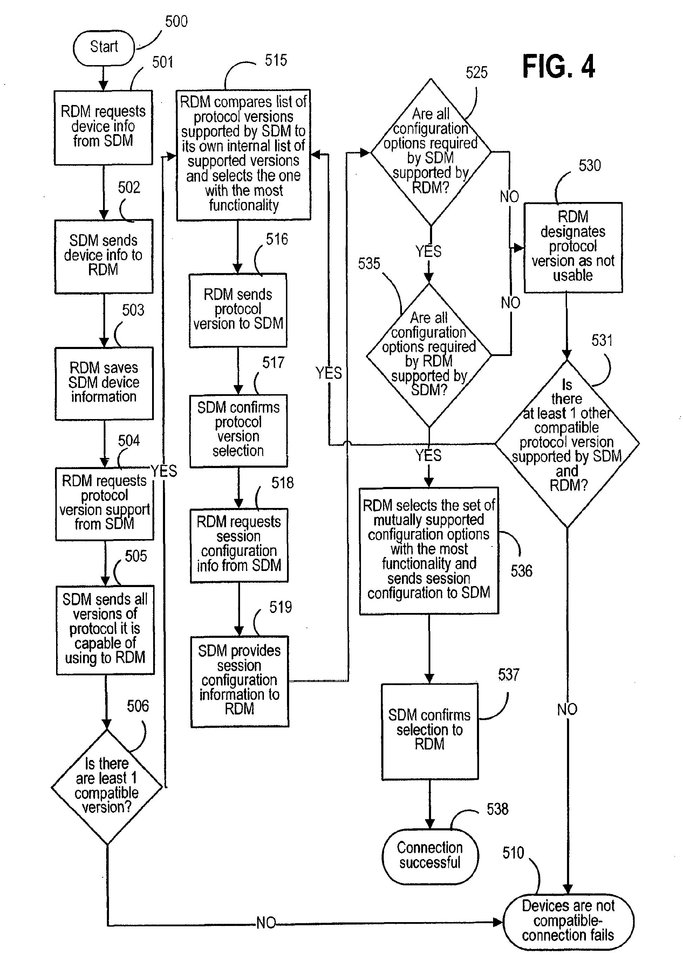

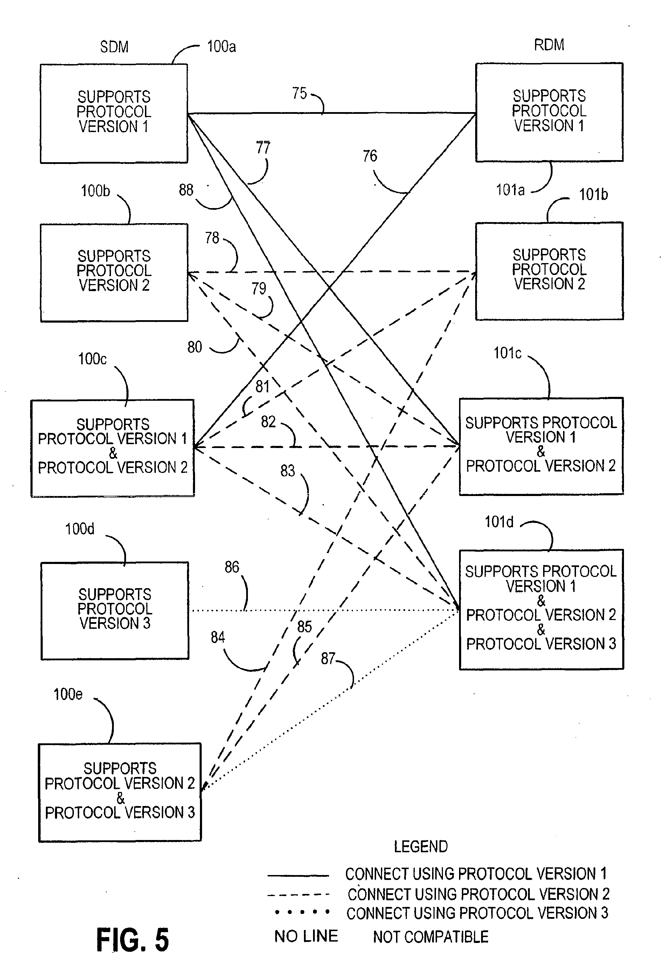

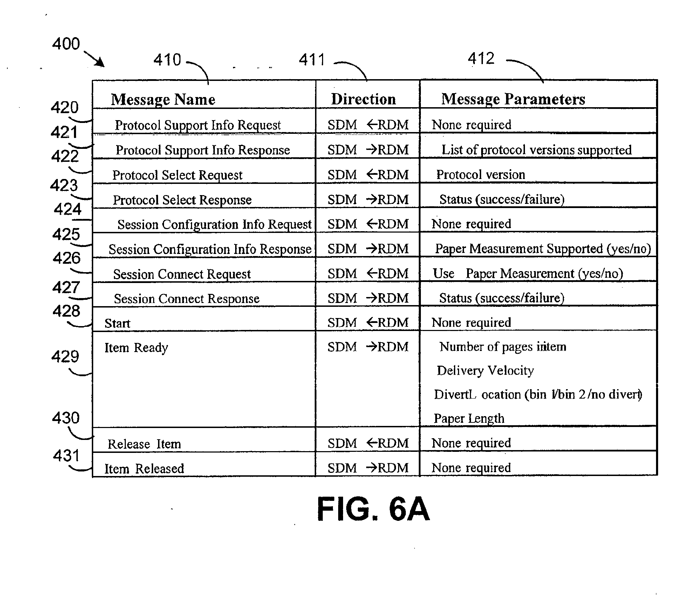

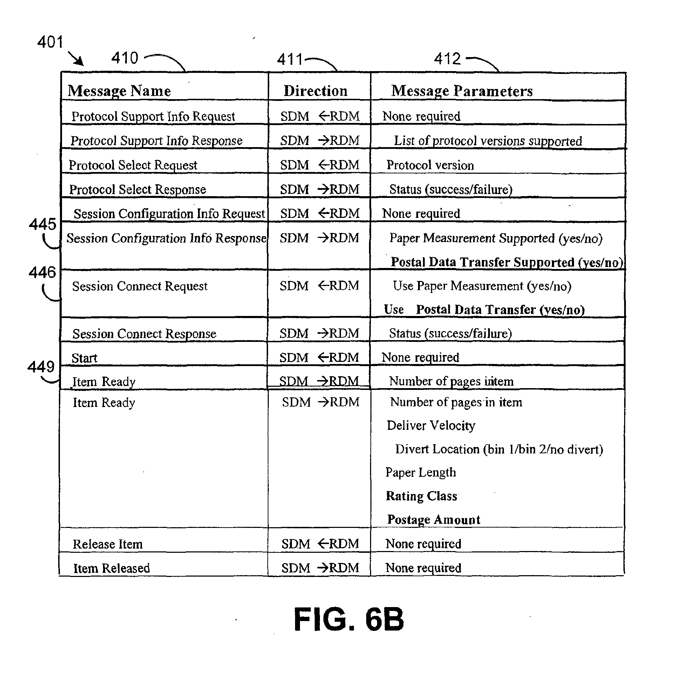

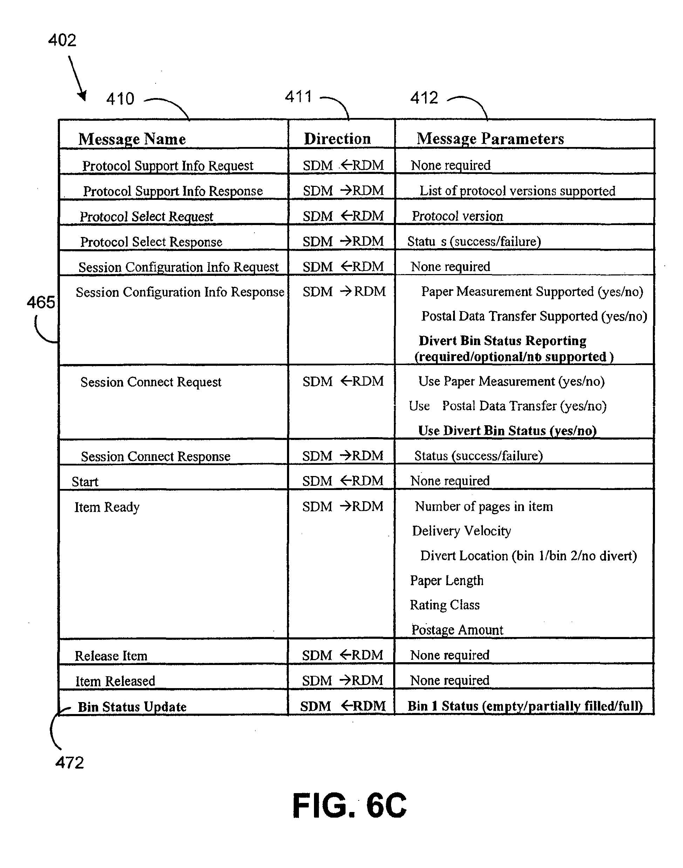

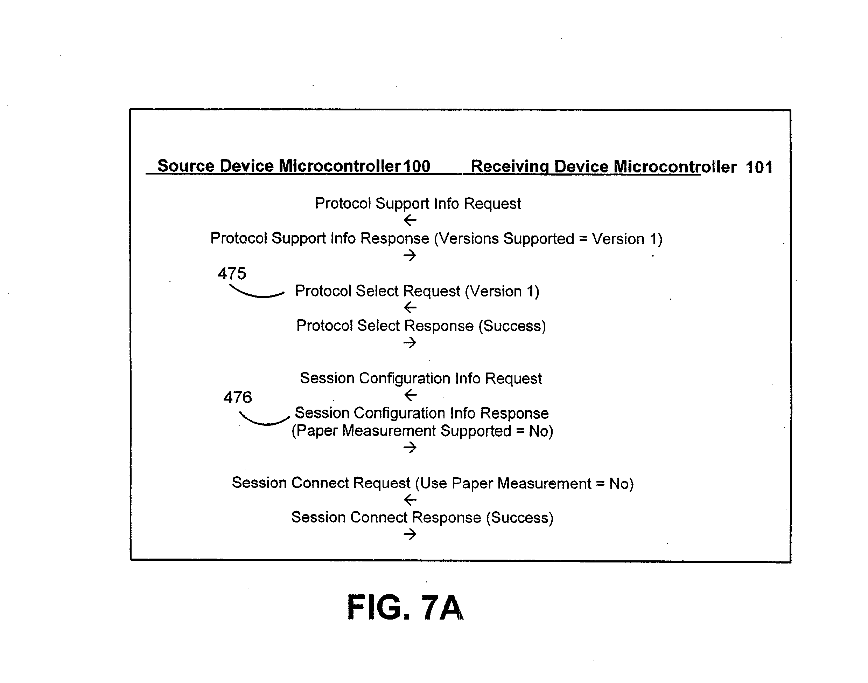

Fig. 2 is a block diagram illustrating the major software devices in the system and their relationship to devices 50, 60 and 70 of Fig. 1. Source device microcontroller 100 contains control software (which is well known in the art) to control source device 50, and receiving device microcontroller 101 contains control software (which is well known in the art) to control receiving device 70 and interface 60. Microcontroller 100 also implements communication protocol 110 and microcontroller 101 implements communication protocol 110. The sign on process of protocol 110 is described in the description of Fig. 4, the protocol compatibility is shown in Fig. 5. Examples of version differences between protocols are shown in Fig. 6 and examples of message sequences for two versions of the communications protocols are shown in Figs. 7A - 7D. The communications link 103 supplies a path for messages to be exchanged between microcontrollers 100 and 101. Link 103 may be any communications path known in the art either hard wired or on an electromagnetic frequency. The physical link between device 50 and device 70 is interface device 60. Items 51 (Fig. 1) are physically transferred from device 50 to device 70 through interface device 60. Interface device 60 is more fully described in the description of Fig. 3.

Fig. 3 is a detailed schematic view of mechanical interface device 60. Device 60 consists of media transport mechanism 120. Mechanism 120 is comprised of a series of roller pairs 121 and 122 that form transport nips for items 51 and sheet metal guides 123 and 124 that form a contained paper path for items 51. Roller pairs 121 and 122 are driven by a pair of DC motors 125 and 126 which drive the roller pairs 121 and 122 in two contiguous drive segments 130 and 131. The partnering of roller pairs 121 and 122 into drive segments 130 and 131 provides a means to verify the transport velocity of item 51 as it is transported from device 50 to device 70. The use of drive segments 130 and 131 avoids the need to introduce large physical gaps between items 51. Divert bins 61 and 63 are used to hold items 51 that have been removed from the processing stream. Device 60 is equipped with sensors that sense the presence of items 51 in bins 61 and 63 and sensors that sense a full condition of bins 61 and 63. Drive zone 131 extends from device 60 into device 70 thus, forming a contiguous drive region spanning devices 60 and 70.

Fig. 4 is a flow chart illustrating the sign on process of the devices shown in Figs. 1 and 2. The process starts at step 500. Then in step 501 microcontroller 101 requests microcontroller 100 to provide identifier information and specific device data for the microcontroller 100 being connected to microcontroller 101. Then in step 502 microcontroller 100 sends the requested information to microcontroller 101. Now in step 503 microcontroller 101 saves microcontroller 100 information in its memory. Next in step 504 microcontroller 101 requests protocol version support from microcontroller 100, i.e., asks which protocols microcontroller 100 is capable of using. Then in step 505 microcontroller 100 sends all versions of protocols it is capable of using to microcontroller 101. At this point the process goes to decision step 506. Decision step 506 determines whether or not there is at least one compatible version of the protocol. If step 506 determines that there is not one compatible version of the protocol, the next step is step 510. Step 510 concludes that microcontroller 100 and microcontroller 101 are not compatible and the connection fails. If step 506 determines that there is one compatible version of the protocol, the next step is step 515.

In step 515 microcontroller 101 compares a list of protocol versions supported by microcontroller 100 to its own internal list of supported versions and selects the matched version with the most functionality. Then in step 516 microcontroller 101 sends the protocol version with the most functionality to microcontroller 100. Next in step 517 microcontroller 100 confirms the protocol version selection. Now in step 518 microcontroller 101 requests session configuration information from microcontroller 100, e.g. microcontroller 100 indicates if it can measure paper, if it can support the transfer of postal data, i.e., rate, class and postage amount, is it capable of using diverse bin status information, etc. Then in step 519 device 50 provides session configuration information to microcontroller 101.

At this point the process goes to step 525. Decision step 525 determines whether or not all configuration options required by microcontroller 100 are supported by microcontroller 101. If step 525 determines that the configuration options required by microcontroller 100 are not supported by microcontroller 101 the next step is step 530. In step 530 microcontroller 101 indicates the protocol version is not usable. The next step is step 531. Step 531 determines whether or not there is at least one other compatible protocol version supported by microcontroller 100 and microcontroller 101. If step 531 determines that there is not one other compatible protocol version supported by microcontroller 100 and microcontroller 101, the next step is step 510, which indicates the devices are not compatible and the connection fails. If step 531 determines that there is one other compatible protocol version supported by microcontroller 100 and microcontroller 101, the next step is step 515. If step 525 determines that the configuration options required by microcontroller 100 are supported by microcontroller 101 the next step is step 535.

Step 535 determines whether or not all the configuration options required by microcontroller 101 are supported by microcontroller 100. If step 535 determines that all the configuration options required by microcontroller 101 are not supported by microcontroller 100, the next step is step 530. If step 535 determines that all the configuration options required by microcontroller 101 are supported by microcontroller 100, the next step is step 536. In step 536 microcontroller 101 selects the configuration options with the most functionality and sends the session configuration to microcontroller 100. Next in step 537 microcontroller 100 confirms the selection to microcontroller 101. Now step 538 indicates the connection is successful.

Fig. 5 is an example of the protocol compatibility that may be achieved by the devices shown in Figs. 1 and 2. The protocol compatibility establishes the data that may be exchanged between micro controller 100 and microcontroller 101. The data includes mechanical parameters that will set devices 50, 60 and 70 as well as other data that is not related to the mechanical parameters of devices 50, 60 and 70. Microcontroller 100a supports protocol version 1 and device microcontroller 100b supports protocol version 2. Microcontroller 100c supports protocol versions 1 and 2 and device microcontroller 100d supports protocol version 3. Microcontroller 100e supports protocol versions 2 and 3. Microcontroller 101a supports protocol version 1 and microcontroller 101 b supports protocol version 2. Microcontroller 101 c supports protocol versions 1 and 2 and microcontroller 101d supports protocol versions 1, 2 and 3. In this example protocol version 3 has more functionality that protocol version 2 and protocol version 2 has more functionality than protocol version 1.

Line 75 indicates that microcontroller 100a may be connected to microcontroller 101a using protocol version 1 and line 76 indicates that microcontroller 100c may be connected to microcontroller 101 a using protocol version 1. Line 88 indicates that microcontroller 100a may be connected to microcontroller 101d using protocol version 1. Line 77 indicates that microcontroller 100a may be connected to microcontroller 101c using protocol version 2 and line 78 indicates that microcontroller 100b may be connected to microcontroller 101b using protocol version 2. Line 79 indicates that microcontroller 100b may be connected to microcontroller 101c using protocol version 2. Line 80 indicates thatmicrocontroller 100b may be connected to microcontroller 101d using protocol version 2. Line 81 indicates that device microcontroller 100c may be connected to microcontroller 101 b using protocol version 2 and line 82 indicates that device microcontroller 100c may be connected to microcontroller 101c using protocol version 2. Line 83 indicates that microcontroller 100c may be connected to microcontroller 101d using protocol version 2 and line 84 indicates that microcontroller 100e may be connected to microcontroller 101 b using protocol version 2. Line 85 indicates that microcontroller 100e may be connected to microcontroller 101c using protocol version 2. Line 86 indicates that microcontroller 100 may be connected to microcontroller 101d using protocol version 3 and line 87 indicates that microcontroller 100e may be connected to microcontroller 101d using protocol version 3.

Fig. 6 describes the messages and message parameters of example protocols 1, 2 and 3. Protocol version 1 is shown in table 400 and protocol version 2 is shown in table 401. Protocol version 3 is shown in table 402. Tables 400, 401 and 402 have columns 410, 411 and 412. The message names are contained in column 410 and the direction of message travel are contained in column 411. The expression "SDM"' represents source device microcontroller 100 (Fig. 2) and the expression "RDM"' represents receiving device microcontroller 101. The names of message parameters when required are contained in column 412.

Tables 400, 401 and 402 are similar. In table 400, row 420 indicates that a message entitled "protocol support information request" may be transferred from microcontroller 101 to microcontroller 100. The above message is used to request the list of protocols versions supported by microcontroller 100. There are no message parameters required in row 420. Row 421 indicates that a message entitled "protocol support information response" may be transferred from microcontroller 100 to microcontroller 101. The above message is used by microcontroller 100 to provide a list of protocol versions it supports to microcontroller 101 when requested. Row 422 indicates that a message entitled "protocol select request" may be transferred from microcontroller 101 to microcontroller 100. The above message is used to select protocol versions that will be used for the remainder of the connection. Row 423 indicates that a message entitled "protocol select response" may be transferred from microcontroller 100 to microcontroller 101. The above message is used to confirm the successful selection of the protocol version specified when the message parameter in row 422 was received. The message indicated in rows 420, 421, 422 and 423 would be included in any protocol versions. Row 424 indicates that a message entitled "session configuration information request" may be transferred from microcontroller 101 to microcontroller 100. The above message is used to request session configuration information. Row 425 indicates that a message entitled "session configuration information response" may be transferred from microcontroller 100 to microcontroller 101. The above message is used by microcontroller 100 to indicate which of the configurable session options controller 100 supports. The session configuration selected determines the feature set that will be available in the integrated system. The feature set may include features related to the electromechanical operation of the system, for example automatic selection of divert bins, the automatic measurement of material in the source device, or the ability to vary the transfer velocity of item 51 for each item being fed instead of requiring that the velocity be constant for the entire mail run. The feature set may also include features related to the user interface of the integrated system, for example the ability to start and stop the integrated system from a control panel connected to either device 50 or device 70, or for example the ability to display error messages detected by device 70 on a control panel connected to device 50. The feature set may also include data that is associated with each item 51 being fed, such as the postage amount, the rating class, or the weight. The feature set may also include features that are not obvious to the end user of the integrated system, but that offer an advantage in implementing the software in either microcontroller 100 or microcontroller 101, for example the ability to store data required by microcontroller 100 in memory belonging to microcontroller 101.

Row 426 of table 400 indicates that a message entitled "session connect request" may be transferred from microcontroller 101 to microcontroller 100. The above message is used to choose a session configuration. Row 427 indicates that a message entitled "session connect response" may be transferred from microcontroller 100 to microcontroller 101. The above message is used to confirm the successful selection configuration options. Row 428 indicates that a message entitled "start" may be transferred from microcontroller 101 to microcontroller 100. The above message is used to start the generation of items 51 (Fig. 3). Row 429 indicates that a message entitled "items ready" may be transferred from microcontroller 100 to microcontroller 101. The above message is used every time source device 50 (Fig. 2) has an item 51 available for delivery to interface device 60. The message parameters are as follows: the number of pages in item 51, divert location (bin 1/bin 2), no divert location, and the paper length of item 51. Row 430 indicates that a message entitled "release items" may be transferred from microcontroller 101 to microcontroller 100. The above message is used when item 51 should be released from device 50 to interface device 60. Row 431 indicates that a message entitled "items released" may be transferred from microcontroller 100 to microcontroller 101. The above message is used when device 50 releases item 51 to interface device 60.

Only those rows in tables 401 and 402 that differ from the above rows in table 400 will be described. Row 445 indicates that a message entitled "session configuration information response" may be transferred from microcontroller 100 to microcontroller 101. The above message is used by microcontroller 100 to indicate which of the configurable session options microcontroller 100 supports. The aforementioned message differs from the message in row 425 of table 400 by having an additional parameter named "postal data transfer supported". The above parameter is used by microcontroller 100 to indicate if it is capable of providing the rate, class and postage amount associated with item 51. Row 446 indicates that a message entitled "session connect request" may be transferred from microcontroller 101 to microcontroller 100. This message is used to choose a session configuration. The aforementioned message differs from the message in row 426 of table 400 in that it adds the used postal data transfer parameter which microcontroller 101 may decide whether or not it wants to use the rate, class and postage amount associated with item 51.

Row 449 indicates that a message entitled "item ready" may be transferred from microcontroller 100 to microcontroller 101. The message is used every time source device 50 has an item 51 available for delivery to interface device 60. The aforementioned message differs from the message in row 429 of table 400 in that it adds parameters for the rate, class and postage amount associated with item 51. These additional parameters are populated with valid data by microcontroller 100 if microcontroller 101 indicates that postal data transfer should be used via the used postal data transfer parameter of the session connect message indicated in row 446 of table 400.

Row 465 of table 402 indicates that a message entitled "session connect request" may be transferred from microcontroller 101 to microcontroller 100. The above message is used to choose a session configuration. The above message is used by microcontroller 100 to indicate which of the configurable session options microcontroller 100 supports. The aforementioned message differs from the message in row 445 of table 401 by having an additional parameter named "divert bin status reporting". The above parameter is used by microcontroller 100 to indicate if it is capable of using bin status information that can be provided by microcontroller 101. An additional difference is that there are three possible values for this parameter. They are as follows. The value of "required" is used if microcontroller 100 can not operate with out the bin status information being provided by microcontroller 100. The value of "optional" is used if microcontroller 100 can provide additional functionality if bin status information is provided by microcontroller 101. However it can also function without it. The value "not supported" is used if microcontroller 100 does not support handling the bin status information. Row 466 indicates that a message entitled "session connect request" may be transferred from microcontroller 101 to microcontroller 100. This message is used to choose a session configuration. The aforementioned message differs from the message in row 446 of table 401 in that it adds the use divert bin status parameter which microcontroller 101 uses to indicate whether or not it will provide the new message "bin status update". Row 472 indicates that a message entitled "bin status update" may be transferred from microcontroller 101 to microcontroller 100. This message is used to report a change in status of either divert bin 1 or divert bin 2. The parameters of row 472 are bin 1 empty, partially filled or full and bin 2 empty, partially filled or full. The aforementioned message represents a new message added to protocol version 3 that is not part of protocol version 1 or protocol version 2. It would be obvious to one skilled in the art that additional messages and/or additional message parameters may be added to new protocol versions.

Fig. 7A is a sequence diagram showing an example of the usage of the message contained in rows 420 - 427 of table 400. In this example, microcontroller 101 supports protocol versions 1, 2 and 3 and microcontroller 100 only supports protocol version 1. Note in line 475 microcontroller 101 has determined only protocol version 1 is mutually understood by microcontroller 100 and microcontroller 101. Thus, protocol version 1 is selected. In line 476 microcontroller 100 indicates that it does not support paper measurement and indicates the same, since it does not have a sensor capable of paper measurement.

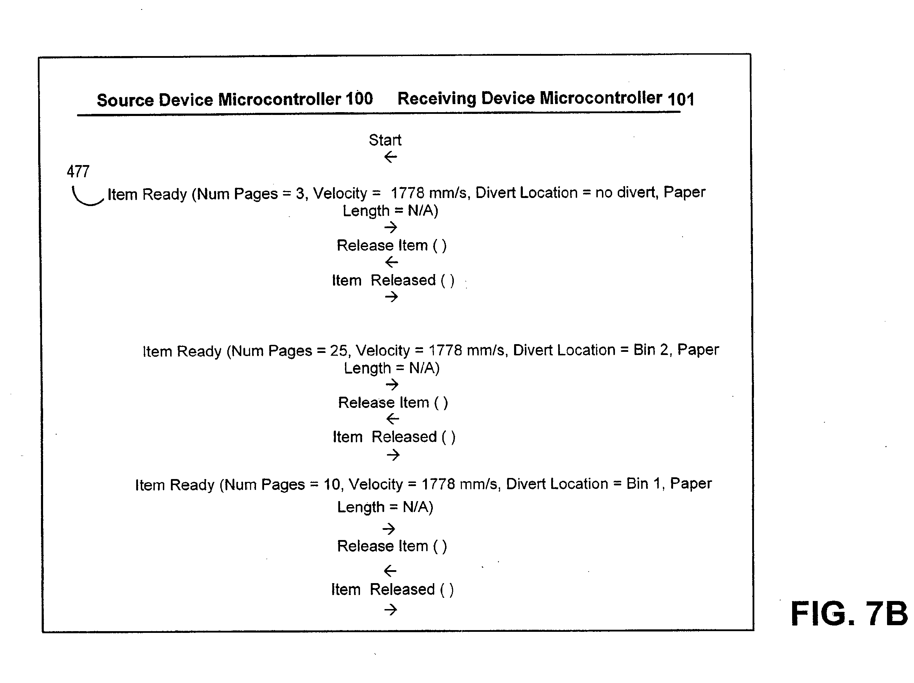

Fig. 7B is a sequence diagram showing an example of the run sequence that would be used if microcontroller 100 and microcontroller 101 had connected using the sign on sequence of Fig. 7A. Note in line 477 the paper length parameter is not applicable to the item ready message. This is consistent with the sensor configuration that was negotiated in Fig. 7A.

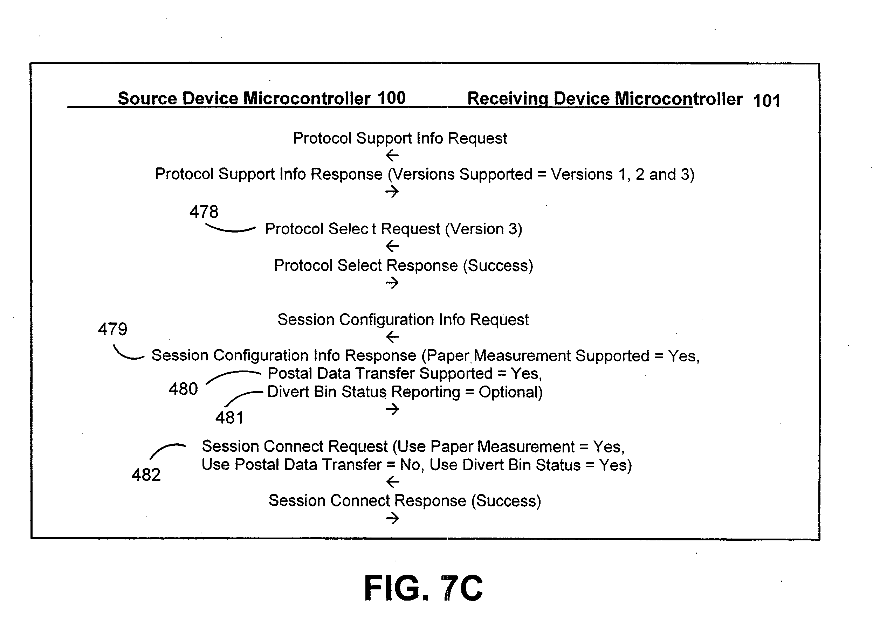

Fig. 7C is a sequence diagram showing an example of the messages contained in table 402 that would be used if microcontroller 100 and microcontroller 101 supported protocol versions 1, 2 and 3. Note in line 478 microcontroller 101 has determined that protocol version 3 provides the most functionality and has selected protocol version 3. In line 479 microcontroller 100 uses message parameters shown in line 480, namely postal data transfer support and line 481 divert bin status reporting.
The above message parameters are available for use and in fact are used due to the selection of protocol version 3. In the above example microcontroller 100 indicates it can support postal data transfer and can make use of divert bin status reporting at the option of microcontroller 101. In line 482 microcontroller 101 indicates not to use postal data transfer since it is not connected to a postal meter. Line 482 also indicates that microcontroller 101 will provide divert bin status messages because it has this capability. It would be obvious to one skilled in the art that if device 60 did not contain sensors to detect a bin full condition or partially full condition, a successful connection using protocol version 3 could still be achieved since microcontroller 100 indicated in line 481 that divert bin status reporting is optional. In such a case microcontroller 101 would have indicated it would not provide such messages in line 482.

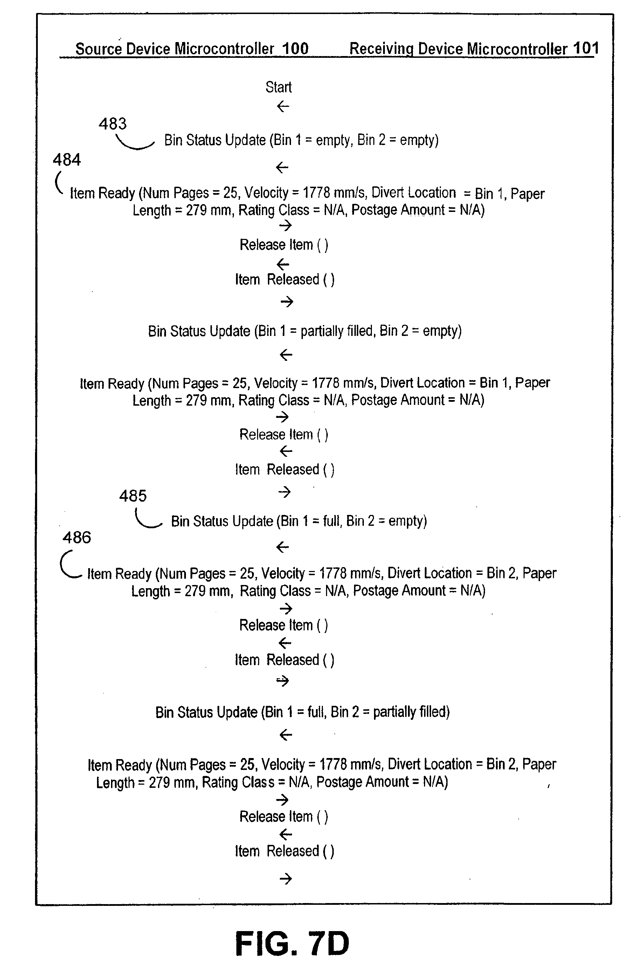

Fig. 7D is a sequence diagram showing an example of the run sequence that would be used if microcontroller 100 and microcontroller 101 had connected using the sign on sequence of Fig. 7C. Note in line 483 microcontroller 101 indicates that both divert bin 1 and divert bin 2 are empty. Note that the above message is being sent in accordance with the session configuration that was negotiated in Fig. 7C, lines 481 and 482. In line 484 microcontroller 100 wants to divert item 51 because item 51 contains a large amount of pages. Microcontroller 100 receives bin status messages. Therefore microcontroller 100 may always select an empty bin, i.e., bin 1. In line 485 microcontroller 101 detects that bin 1 is full and reports this fact to microcontroller 100. As a result of the above in line 486 microcontroller 100 selects divert location bin 2, since bin 2 is now the only empty bin.

The above specification describes a new and improved method for connecting future devices to a system or enhancing the capability of existing devices that are connected to the system. It is realized that the above description may indicate to those skilled in the art additional ways in which the principles of this invention may be used. Therefore, it is intended that this invention be limited only by the scope of the appended claims.

## Claims

1. A method for interfacing a source device (50) to a receiving device (70), the method comprising the steps of:
A) negotiating a protocol version (110) to use for the duration of the connection;
B) allowing negotiation of a feature set of the protocol version;
C) configuring a mechanical interface (60) to support the feature set and the protocol version (110); and
D) operating the receiving device (70) in accordance with the negotiated protocol version (110) and negotiated feature set to synchronize exchange of data and material between the source device (50) and the receiving device (70).

2. The method claimed in Claim 1, wherein the feature set controls mechanical behavior of the receiving device (70).

3. The method claimed in Claim 1 or 2, wherein the feature set controls mechanical behavior of the source device (50).

4. The method claimed in Claim 1, 2 or 3, wherein the feature set controls electromechanical capability of the source device (50).

5. The method claimed in any preceding claim, wherein the feature set controls electromechanical capability of the receiving device (70).

6. The method claimed in any preceding claim, wherein the negotiated protocol version (110) includes a fixed feature set as the feature set.

7. The method claimed in any preceding claim, wherein in step D, the operation occurs at the source device (50).

8. The method claimed in any preceding claim, wherein in step D, the operation occurs at the source device (50) and the receiving device (70).

9. The method claimed in any preceding claim, wherein the source device (50) is selected from the group consisting of: a printer, a sheet feeder, a cutter, and an accumulator.

10. The method claimed in any preceding claim, wherein the receiving device (70) is selected from the group consisting of: an accumulator, inserter, folder and a tabber.

11. The method claimed in any preceding claim, wherein the protocol version (110) determines a set of messages that will be exchanged between the source device (50) and the receiving device (70).

12. The method claimed in Claim 11, wherein the message set contains messages for determining the feature set.

13. The method claimed in any preceding claim, wherein the protocol version (110) determines a set of message parameters that will be exchanged between the source device (50) and the receiving device (70).

14. The method claimed in any preceding claim, wherein the feature set determines physical parameters of the material that will be exchanged between the source device (50) and the receiving device (70).

15. The method claimed in any preceding claim, wherein the feature set determines data that will be exchanged between the source device (50) and the receiving device (70).

16. The method claimed in any preceding claim, further including the step of:
identifying the source device (50) that is going to be connected.

## Patentansprüche

1. Verfahren zum Verbinden einer Quellvorrichtung (50) über eine Schnittstelle mit einer Empfangsvorrichtung (70), wobei das Verfahren die folgenden Schritte umfasst:
A) Aushandeln einer Protokollversion (110) zur Verwendung während der Dauer der Verbindung;
B) Erlauben des Aushandelns eines Merkmalssatzes der Protokollversion;
C) Konfigurieren einer mechanischen Schnittstelle (60) zur Unterstützung des Merkmalssatzes und der Protokollversion (110); und
D) Betreiben der Empfangsvorrichtung (70) gemäß der ausgehandelten Protokollversion (110) und dem ausgehandelten Merkmalssatz, um Austausch von Daten und Material zwischen der Quellvorrichtung (50) und der Empfangsvorrichtung (70) zu synchronisieren.

2. Verfahren nach Anspruch 1, wobei der Merkmalssatz mechanisches Verhalten der Empfangsvorrichtung (70) steuert.

3. Verfahren nach Anspruch 1 oder 2, wobei der Merkmalssatz mechanisches Verhalten der Quellvorrichtung (50) steuert.

4. Verfahren nach Anspruch 1, 2 oder 3, wobei der Merkmalssatz elektromechanische Fähigkeit der Quellvorrichtung (50) steuert.

5. Verfahren nach einem der vorhergehenden Ansprüche, wobei der Merkmalssatz elektromechanische Fähigkeit der Empfangsvorrichtung (70) steuert.

6. Verfahren nach einem der vorhergehenden Ansprüche, wobei die ausgehandelte Protokollversion (110) einen festen Merkmalssatz als den Merkmalssatz umfasst.

7. Verfahren nach einem der vorhergehenden Ansprüche, wobei in Schritt D der Betrieb an der Quellvorrichtung (50) erfolgt.

8. Verfahren nach einem der vorhergehenden Ansprüche, wobei in Schritt D der Betrieb an der Quellvorrichtung (50) und der Empfangsvorrichtung (70) erfolgt.

9. Verfahren nach einem der vorhergehenden Ansprüche, wobei die Quellvorrichtung (50) aus der Gruppe bestehend aus einem Drucker, einem Blatteinzug, einer Schneideeinrichtung und einem Akkumulator ausgewählt ist.

10. Verfahren nach einem der vorhergehenden Ansprüche, wobei die Empfangsvorrichtung (70) aus der Gruppe bestehend aus einem Akkumulator, einer Kuvertiermaschine, Falzmaschine und einem Tabber ausgewählt ist.

11. Verfahren nach einem der vorhergehenden Ansprüche, wobei die Protokollversion (110) einen Satz von Meldungen bestimmt, die zwischen der Quellvorrichtung (50) und der Empfangsvorrichtung (70) ausgetauscht werden.

12. Verfahren nach Anspruch 11, wobei der Meldungssatz Meldungen zum Bestimmen des Merkmalssatzes enthält.

13. Verfahren nach einem der vorhergehenden Ansprüche, wobei die Protokollversion (110) einen Satz von Meldungsparametern bestimmt, die zwischen der Quellvorrichtung (50) und der Empfangsvorrichtung (70) ausgetauscht werden.

14. Verfahren nach einem der vorhergehenden Ansprüche, wobei der Merkmalssatz physikalische Parameter des Materials bestimmt, das zwischen der Quellvorrichtung (50) und der Empfangsvorrichtung (70) ausgetauscht wird.

15. Verfahren nach einem der vorhergehenden Ansprüche, wobei der Merkmalssatz Daten bestimmt, die zwischen der Quellvorrichtung (50) und der Empfangsvorrichtung (70) ausgetauscht werden.

16. Verfahren nach einem der vorhergehenden Ansprüche, ferner umfassend den folgenden Schritt:
Identifizieren der Quellvorrichtung (50), die angeschlossen wird.

## Revendications

1. Procédé d'interfaçage d'un dispositif source (50) à un dispositif de réception (70), le procédé comprenant les étapes consistant :
A) à négocier une version de protocole (110) à utiliser pendant la durée de la connexion ;
B) à autoriser une négociation d'un ensemble de fonctions de la version de protocole ;
C) à configurer une interface mécanique (60) pour prendre en charge l'ensemble de fonctions et la version de protocole (110) ; et
D) à faire fonctionner le dispositif de réception (70) conformément à la version de protocole (110) négociée et à l'ensemble de fonctions négocié pour synchroniser un échange de données et de matériel entre le dispositif source (50) et le dispositif de réception (70).

2. Procédé revendiqué dans la revendication 1, dans lequel l'ensemble de fonctions commande un comportement mécanique du dispositif de réception (70).

3. Procédé revendiqué dans la revendication 1 ou 2, dans lequel l'ensemble de fonctions commande un comportement mécanique du dispositif source (50).

4. Procédé revendiqué dans la revendication 1, 2 ou 3, dans lequel l'ensemble de fonctions commande une capacité électromécanique du dispositif source (50).

5. Procédé revendiqué dans l'une des revendications précédentes, dans lequel l'ensemble de fonctions commande une capacité électromécanique du dispositif de réception (70).

6. Procédé revendiqué dans l'une des revendications précédentes, dans lequel la version de protocole (110) négociée comporte un ensemble fixe de fonctions établi comme étant l'ensemble de fonctions.

7. Procédé revendiqué dans l'une des revendications précédentes, dans lequel, dans l'étape D, le fonctionnement a lieu au niveau du dispositif source (50).

8. Procédé revendiqué dans l'une des revendications précédentes, dans lequel, dans l'étape D, le fonctionnement a lieu au niveau du dispositif source (50) et du dispositif de réception (70).

9. Procédé revendiqué dans l'une des revendications précédentes, dans lequel le dispositif source (50) est choisi dans le groupe constitué : d'une imprimante, d'un dispositif d'alimentation en feuilles, d'un dispositif de coupe, et d'un accumulateur.

10. Procédé revendiqué dans l'une des revendications précédentes, dans lequel le dispositif de réception (70) est choisi dans le groupe constitué : d'un accumulateur, d'un dispositif d'insertion, d'une plieuse et d'un dispositif de pose d'étiquettes.

11. Procédé revendiqué dans l'une des revendications précédentes, dans lequel la version de protocole (110) détermine un ensemble de messages qui vont être échangés entre le dispositif source (50) et le dispositif de réception (70).

12. Procédé revendiqué dans la revendication 11, dans lequel l'ensemble de messages contient des messages permettant de déterminer l'ensemble de fonctions.

13. Procédé revendiqué dans l'une des revendications précédentes, dans lequel la version de protocole (110) détermine un ensemble de paramètres de messages qui vont être échangés entre le dispositif source (50) et le dispositif de réception (70).

14. Procédé revendiqué dans l'une des revendications précédentes, dans lequel l'ensemble de fonctions détermine des paramètres physiques du matériel qui va être échangé entre le dispositif source (50) et le dispositif de réception (70).

15. Procédé revendiqué dans l'une des revendications précédentes, dans lequel l'ensemble de fonctions détermine des données qui vont être échangées entre le dispositif source (50) et le dispositif de réception (70).

16. Procédé revendiqué dans l'une des revendications précédentes, comportant en outre l'étape consistant :
à identifier le dispositif source (50) qui va être connecté.
